# EUROPEAN PATENT APPLICATION

(11) **EP 3 671 071 A1**
(43) Date of publication of application: **24.06.2020**
(21) Application number: 18214584.7
(22) Date of filing: 20.12.2018
(51) Int. Cl.: F25B 41/06

(54) **VALVE, IN PARTICULAR EXPANSION VALVE**

(71) Applicant: Danfoss A/S, 6430 Nordborg (DK)
(72) Inventor: LARSEN, Sigurd, 6430 Nordborg (DK); HARCK, Kurt, 6430 Nordborg (DK); PAWLIK, Jens, 6430 Nordborg (DK)
(74) Representative: Stevens, Brian

(57) **Abstract**

A valve (1), in particular expansion valve, is described comprising a valve element (6) driven by a rotary motor (7) comprising a rotor (9) arranged inside a motor section (19) of a tube (14), the tube (14) having a wall of a first thickness in the motor section (19) and being connected to a valve housing (2) by welding.

Such a valve should have a small motor and a tube which can be produced with low costs.

To this end the tube (14) comprises flange (23) at the end adjacent the valve housing (2), the flange (23) comprising a second thickness larger than the first thickness.

## Description

The present invention relates to a valve, in particular an expansion valve, comprising a valve element driven by a rotary motor comprising a rotor arranged inside a motor section of a tube and, the tube having a wall of a first thickness in the motor section and being connected to a valve housing by welding.

Such a valve can be used for controlling the flow of a refrigerant in a cooling or refrigeration system or an air conditioning system. Accordingly, it is necessary that the valve is sealed to the environment in order to prevent an escape of refrigerant from the system. To this end, the tube is provided.

In a finally assembled state the tube is arranged between a stator of the motor and the rotor of the motor, in other words in the air gap between the stator and the rotor. Since the air gap should be as small as possible in order to allow a torque of the motor as high as possible, the material of the tube should be as thin as possible.

This causes a problem when connecting the tube to the valve housing by welding. Although the welding seam per se is as a rule strong enough to withstand the required pressures in the refrigeration system, regions of the tube in the vicinity of the welding seam can be weakened by the welding process. The thinner the material of the tube is the larger is the risk that the weakened material of the tube can no longer withstand the high pressures inside the system with the risk that refrigerant escapes to the environment.

The use of a thicker material would be a way to solve this problem. However, a thicker material requires a larger air gap with the consequence that the torque to be transmitted from the stator to the rotor is reduced. In order to produce the required torque a larger motor has to be used which is more expansive and requires additional space.

An object underlying the invention is to provide a valve having a small motor and a tube which can be produced with low costs.

This object is solved with a valve as described at the outset in that the tube comprises a flange at the end adjacent the valve housing.

In such a valve the welding seam can be produced in the region of the flange. Since the thickness of the flange may be larger than the thickness of the tube in the motor section it is allowable that the welding process weakens the region of the flange adjacent the welding seam. Since the flange has a larger radial extension, this weakening does not affect the tightness and the pressure resistance of the tube.

In an embodiment of the invention the thickness of the flange is at least twice the thickness of the tube in the motor section. Even if the stability of the flange is reduced to 50 % of the original stability (without welding) it has still the same stability as the tube outside the flange.

In an embodiment of the invention the wall has a constant thickness outside the flange. This allows a simple production of the tube. The term "constant" allows a variation of the thickness with a few 1/100 mm.

In an embodiment of the invention the flange has a radial extension at least twice the thickness of the tube in the motor section. Accordingly, a welding seam can be produced with a certain radial distance to the tube, so that heat produced by the welding process does not affect the tube outside the flange.

In an embodiment of the invention the valve housing comprises a mounting face and the flange is connected to the mounting face. The mounting face is plane which facilitates the welding of the flange to the mounting face.

In an embodiment of the invention the flange is at least in a radially outer range parallel to the mounting face. In the radially outer range the flange lays flat against the mounting face which allows a very reliable connection between the flange and the valve housing.

In an embodiment of the invention the mounting face comprises a step and the flange is positioned in the step. The step gives an additional stability of the connection between the valve housing and the tube.

In an embodiment of the invention a welding seam is at least partly arranged between the radially outer border of the flange and an outer wall of the housing. This means that the welding seam is as far as possible from the tube itself so that the tube itself is not affected by the welding seam.

In an embodiment of the invention the rotor is supported by at least a first bearing which is mounted with determination of the tube in a first bearing section of the tube, wherein the motor section and the first bearing section comprise different diameters. The diameter of the motor section can be, for example, larger than the diameter of the first bearing section. When the first bearing is mounted into the first bearing section e. g. with press-fit, it is unavoidable that the first bearing section is widened or deformed in another way. Such a deformation would bear the risk that the motor section is deformed as well. However, a deformation of the motor section should be avoided to keep small the tolerances of the motor section with the effect that the tolerances of the motor, in particular the thickness of the air gap, can be kept as small as possible. This is achieved by having the different diameters. The first bearing section is located on a side of the motor opposite the flange. The flange can be used to additionally stabilize the form of the motor section.

In an embodiment of the invention a transition section between the first bearing section and the motor section is inclined with respect to an axis of rotation of the rotor. When the first bearing section is expanded during press-fitting of the first bearing the inclination of the transition section can slightly be changed without changing the form of the motor section.

In an embodiment of the invention the rotor is supported by a second bearing arranged on a side of the motor opposite to the first bearing, the second bearing being mounted in a second bearing section of the tube by deformation of the tube and the motor section and the second bearing section comprise different diameters. Here the same advantages can be observed as with the first bearing section. The deformation of the second bearing section is taken up by the transition between the motor section and the second bearing section. Together with the flange extending radially and having a larger thickness than the tube in the motor section this gives a reliably tight sealing of the system enabling at the same time the use of a small motor.

An embodiment of the present invention will now be described in more detail with reference to the drawing, wherein:
- Fig. 1: shows a sectional view of an expansion valve,
- Fig. 2: shows an enlarged view of a tube and
- Fig. 3: shows an enlarged sectional view of a welding connection.

In all figures the same elements are denoted with the same reference numerals.

An expansion valve 1 comprises a valve housing 2 having two connectors 3, 4 which are fixed to the housing. A valve seat 5 is part of the valve housing 2 or can be a separate part. A valve element 6 cooperates with the valve seat to control a flow of fluid between the two connectors 3, 4. To this end the valve element 6 can be moved in a direction towards the valve seat 5 to close the valve 1 or in a direction away from the valve seat 5 to open the valve at least partly.

The movement of the valve element 6 is controlled by motor 7, preferably a stepping motor. The motor 7 comprises a stator 8 which is fixed against rotation and a rotor 9 which is rotatably mounted within the stator 8. The rotor 9 is operatively connected to a shaft 10 which bears or forms a lead screw 11 having an outer thread 12. The lead screw 11 is in threaded connection with a lead nut 13 which is fixed against rotation and connected to the valve element 6. When the rotor rotates the shaft 10 and thus the lead screw 11 rotate as well. This rotational movement is translated into a linear movement of the valve element 6 via the pairing of lead screw 11 and lead nut 13.

The valve 1 is used to control a flow of a refrigerant in a cooling or refrigeration system. The escape of refrigerant to the environment must be prevented. To this end a tube 14 is provided which is connected to the valve housing 2 by welding. The tube 14 is arranged between the stator 8 and the rotor 9 of the motor 7. In order to keep an air gap between the stator 8 and the rotor 9 as small as possible, the material of the tube 14 should be as thin as possible as well.

In the embodiment shown the thickness of the material of the tube 14 is 0,2 mm. The material of the tube 14 is steel, preferably stainless steel.

The rotor 9 is supported in a first bearing 15 on one side of the rotor 9 and by a second bearing 16 on the other side of the rotor 9.

First bearing 15 is mounted by press fit in a first bearing section 17 of the tube 14. Second bearing 16 is mounted by press fit in a second bearing section 18 of the tube 14. A motor section 19 is arranged between the first bearing section 17 and the second bearing section 18. Instead of press fit any other mounting process can be used in which the bearing section 17, 18 are deformed to adapt to the outer form of the bearing 15, 16.

The motor section 19 of tube 14 should have tolerances as small as possible to adapt the motor section 19 of the tube 14 to the motor 7 in the best way. However, during press fitting the first bearing 15 into the first bearing section 17 and by press fitting the second bearing 16 into the second bearing section 18 a deformation of the bearing sections 17, 18 is unavoidable.

In order to reduce the risk that the deformation of the first bearing section 17 affects the form of the motor section 19, the first bearing section 17 has a diameter smaller than the rotor section 19 and the second bearing section 18 has a diameter larger than the motor section 19.

A first transition section 20 between the first bearing section 17 and the motor section 19 is inclined with respect to a longitudinal or rotational axis of the rotor 9. A second transition section 21 between the second bearing section 16 and the motor section 19 is inclined relative to the rotational axis of rotor as well. Accordingly, when a deformation of the first bearing section 17 occurs, this deformation cannot propagate to the motor section 19. Such a deformation would deform only parts of the first transition section 20.

The same is true for the second transition section 21. When the second bearing 16 is press fit into the second bearing section 18 the widening of the second bearing section 18 is taken up by the second transition section 21 without affecting the motor section 19. The staggered diameter relation of the first bearing section 17, the motor section 19 and the second bearing section 18 allows mounting of the first bearing 15 in the tube 14 by press fit since the first bearing 15 can be guided without problems through the motor section 19. The rotor 9 can be mounted in the tube 14 since it can be guided without any problems through the second bearing section 18. Finally, the second bearing 16 can be mounted by press fit into the second bearing section 18. Accordingly, the motor section 19 is not deformed even when the bearings 15, 16 are mounted by press fit in the bearing sections 17, 19.

The tube 14 is closed at one end 22 and comprises a flange 23 at the other end. The tube 14 is welded to the valve housing 2 at the end comprising the flange 23.

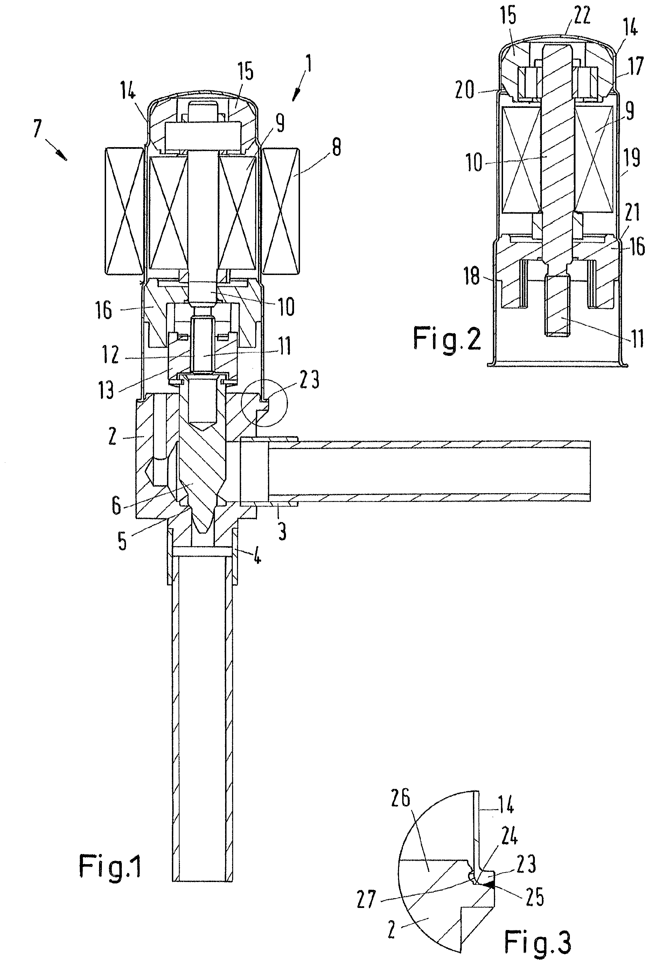

As can be seen in Fig. 3, the flange 23 is formed radially outwardly and comprises an outer region which runs parallel to a mounting face 24 which is provided at the valve housing 2. The mounting face 24 is provided at a stepped area of the valve housing at the circumference of a front face of the valve housing 2.

The flange 23 has a thickness which is much larger than the thickness of the tube 14 in the motor section 19. The tube can have a constant thickness in all regions outside the flange 23. The flange 23 can, for example, comprise a thickness which is at least 1,5 times the thickness of the tube 14 in the motor section 19.

The flange 23 has a radial extension which is at least twice the thickness of the tube 14 in the motor section 19. In Fig. 3 the thickness of the flange 23 is shown oversized.

A welding seam 25 is positioned at the radial outside of the flange 23 and the mounting face 24 of the valve housing 2.

Even if the welding process would weaken the material of the tube in the range of the flange 23, this is no problem since the thickness of the flange 23 is large enough to withstand the pressures inside the tube even when weakened.

Since the welding seam 25 is arranged at the radially outermost position possible, the rest of the tube 14 is not affected by the welding process, i. e. heat produced during the welding does not damage the tube 14. Welding can be performed, for example, by using a laser beam.

The mounting face 24 surrounds a step 26 of the valve housing. An air gap between the tube 14 and the step 26 is kept small. It is basically only present in an area around a rounded corner 27 produced during forming the flange 23 out of the tube 14. The rounded corner 27 is a result of a deep drawing process by which the tube 14 is formed.

A deformation caused by the welding process is limited to the second bearing section 18 and does not affect the motor section 19 of the tube.

The valve 1 can be mounted using a unit shown in Fig. 2 comprising the tube 14 and the rotor 9 together with the bearings 15, 16 in the bearing section 17, 18. Since the bearings 15, 16 are mounted with press fit in the bearing sections 17, 18, the unit can be handled without the risk that parts are falling out of the unit.

After attaching the lead nut 13 and the valve element 6 to the unit, the unit can be fixed to the valve housing 2 by welding, i. e. by producing the welding seam 25. Thereafter the stator 8 can be placed around the tube 14.

## Claims

1. Valve (1), in particular expansion valve, comprising a valve element (6) driven by a rotary motor (7) comprising a rotor (9) arranged inside a motor section (19) of a tube (14) the tube (14) having a wall of a first thickness in the motor section (19) and being connected to a valve housing (2) by welding, **characterized in that** the tube (14) comprises a flange (23) at the end adjacent the valve housing (2).

2. Valve according to claim 1, **characterized in that** the wall has a constant thickness outside the flange (23).

3. Valve according to claim 1 or 2, **characterized in that** the flange (23) has a radial extension at least twice the thickness of the tube (14) in the motor section (13).

4. Valve according to any of claims 1 to 3, **characterized in that** the valve housing (2) comprises a mounting face (24) and the flange (23) is connected to the mounting face (24).

5. Valve according to claim 4, **characterized in that** the mounting face (24) comprises a step and the flange (23) is positioned in the step.

6. Valve according to claim 5, **characterized in that** a welding seam (25) is at least partly arranged between the radially outer border of the flange (23) and an outer wall of the valve housing (2).

7. Valve according to any of claims 1 to 6, **characterized in that** the rotor (9) is supported by at least a first bearing (15) which is mounted with deformation of the tube in a first bearing section (17) of the tube (14), wherein the motor section (19) and the first bearing section (17) comprise different diameters.

8. Valve according to claim 7, **characterized in that** a transition section (20) between the first bearing section (17) and the motor section (19) is inclined with respect to an axis of rotation of the rotor (9).

9. Valve according to claim 7 or 8, **characterized in that** the rotor (9) is supported by a second bearing (16) arranged on a side of the motor opposite to the first bearing (15), the second bearing (16) being mounted in a second bearing section (18) of the tube (14) by deformation of the tube and the motor section (19) and the second bearing section (18) comprise different diameters.
